# EUROPEAN PATENT APPLICATION

(11) **EP 1 806 393 A1**
(43) Date of publication of application: **11.07.2007**
(21) Application number: 05795667.4
(22) Date of filing: 18.10.2005
(51) Int. Cl.: C12M 1/00, C12M 1/34, G01N 33/50

(54) **MICROREACTOR FOR GENETIC TEST**

(30) Priority: 27.10.2004 JP 2004312314
(71) Applicant: Konica Minolta Medical & Graphic, Inc., Tokyo 163-0512 (JP)
(72) Inventor: NAKAJIMA, Akihisa, Konica Minolta Med. & Grap. Inc, Tokyo 163-0512 (JP); UEDA, Eiichi, Konica Minolta Med. & Grap. Inc., Tokyo 163-0512 (JP); SANDO, Yasuhiro, Konica Minolta Tech. Center Inc., Tokyo, 191-8511 (JP); HIGASHINO, Kusunoki, Konica Minolta Tech Cent. Inc, Tokyo, 191-8511 (JP); ISHIDA, Nobuhisa, Konica Minolta Tech. Center Inc., Tokyo, 191-8511 (JP)
(74) Representative: Roberts, Mark Peter
(86) International application number: PCT/JP2005/019076
(87) International publication number: WO 2006/046433

(57) **Abstract**

The invention provides gene-inspecting micro-reactor for detecting a bacterial cell wherein flexibility and high sensitivity are secured, low cost by a disposable type is realized, highly accurate detection is possible in a simple structure, and preliminary processing suitable for amplification reaction can be done for specimen efficiently and rapidly.

After lysing a bacterial cell in the specimen by bacteriolysis reagent stored in bacteriolysis reagent storage section 3, and after adsorbing bacterial genes on carriers filled in carrier filling section 4, there is conducted preliminary processing for washing and detecting bacterial genes. Further, there are provided a control means that switches the direction of liquid-feeding for a liquid containing bacterial genes fed to carrier filling section 4, a check valve, amplified reagent storage section 7 and a cooling means such as Pertier element that cools reagent mixing section.

## Description

### TECHNICAL FIELD

The present invention relates to a micro-reactor for gene inspection in which a specimen injected from a specimen storage section or a processing liquid used for preliminary processing of the specimen and a reagent stored in an amplification reagent storage section are fed to a reaction section to conduct gene amplification reaction, and operations to detect the gene amplification reaction in a detecting section are carried out in a chip in which the respective sections are communicated each other through micro flow paths, and in particular, to a micro-reactor suitable for detection of germs coming out of the specimen.

### BACKGROUND ART

In recent years, there has been developed a system wherein apparatuses and means (e.g., pump, valve, flow path and sensor) for conducting conventional sample preparation, chemical analyses and chemical syntheses are miniaturized and are integrated on one chip, by using freely micro machine technologies and hyperfine processing technologies (Patent Document 1). This is also called µ-TAS (Micro total Analysis System), a bio-reactor, lab-on-chips and a bio-chip, and practical applications thereof on the fields of medical inspections and diagnoses, environmental measurement and agricultural production are expected. As is observed in gene inspections, in particular, when complicated processes, skilled manipulation and operations of equipment are needed, benefits of an automated, high speed and simplified micronized analysis system capable of practicing analyses requiring less cost, less amount of necessary sample and less time required and is not restricted by time and a space, are great.

For example, in the case of sudden prevalence of a novel infectious disease observed in a human being or livestock, identification of a virus or a germ causing the infectious disease becomes a first barrier in precautionary measures representing a fight against time. A gene inspection technology which can produce results rapidly without being restricted by a place can meet such urgent demand, which is different from a conventional detection method in which cultivation of germs tend to be rate-determining. In addition, there are strong demands for the gene inspection technology, in the fields of diagnoses of diseases by a gene, estimation of the risk of complications for lifestyle-related diseases and gene medical treatment.

In the clinical inspections, importance is attached to quantitative character of analyses, accuracy of analyses and to economy. It is therefore a subject to establish a liquid-feeding system that is of a simple structure and is highly reliable. A micro fluid control element having high accuracy and excellent reliability is demanded. A micro-pump system suitable for the micro fluid control element has already been proposed by the inventors of the present invention (Patent Document 2).

Chips to cope with a large amount of clinical specimens are required to be disposable, and problems such as tackling character for multi-use and manufacturing cost need to be solved.

In the case of DNA chip in which a large number of DNA fragments are immobilized highly densely, there are problems that contents of information to be loaded, increasing manufacturing cost, accuracy of detection and reproducibility are not sufficient. However, there is a possibility that a simple and rapid inspection method is provided by chasing an efficiency of DNA amplification reaction on real time by using primer that can be changed properly, rather by a method to arrange a large number of DNA probes on a chip substrate comprehensively, depending on purposes and types of gene inspections.
(Patent Document 1) TJOKKAI No. 2004-28589
(Patent Document 2) TJOKKAI No. 2001-322099
(Patent Document 3) TJOKKAI No. 2004-108285
(Non-Patent Document 1) "DNA chip technology and its application", "Protein nucleic acid enzyme" Vol. 43, No. 13 (1998) Fusao Kimizuka, Ikunoshin Kato, issued by Kyoritsu Shuppan Co.

### DISCLOSURE OF INVENTION

### OBJECT OF THE INVENTION

The present invention has been achieved in view of the actual situation stated above, and its object is to provide a micro-reactor for gene inspection that is suitable for germ detection from a specimen by gene amplification reaction.

Namely, the object is to provide a gene-inspecting micro-reactor for germ detection wherein versatility and high sensitivity are secured, DNA amplification of a method to change primer and bio-probe to be used can be conducted, disposable type and low cost are realized, and detection at high accuracy can be done by a simple structure.

### MEANS FOR SOLVING THE OBJECT

A micro-reactor for gene inspection of the invention is one in which a specimen injected from a specimen storage section or a processing liquid used for preliminary processing of the specimen and a reagent stored in an amplification reagent storage section are fed to a reaction section to conduct gene amplification reaction, and operations to detect the gene amplification reaction in a detecting section are carried out in a chip in which the respective sections are communicated each other through micro flow paths wherein there are provided in the chip, a bacteriolysis reagent storage section in which bacteriolysis reagents for lysing bacterial cells in the specimen are stored, a carrier filling section in which particulate carriers which adsorb bacterial genes lysed by the bacteriolysis reagent are stored, a cleaning fluid storage section storing a cleaning fluid that is fed to the carrier filling section after the bacterial genes are adsorbed to the carriers, and an extracted reagent storage section storing gene extracting reagents which extract the bacterial genes adsorbed on the carriers, and a control means that switches the liquid-feeding direction for a liquid containing the bacterial genes fed to the carrier filling section, and causes the liquid to make longitudinal movements repeatedly in the carrier filling section.

### EFFECTS OF THE INVENTION

In the aforesaid invention, a bacterial cell in the specimen is subjected to bacteriolysis as a preliminary processing for the specimen, and washing is conducted under the condition that the genes are adsorbed on particulate carriers (beads or the like), then, adsorbed genes are eluted by an extraction liquid to be fed to the reaction section so that gene amplification reaction is carried out. Thus, it is possible to obtain efficiently and rapidly the preliminary processing liquid suitable for the amplification reaction.

In particular, since a liquid-feeding direction for a liquid containing bacterial genes subjected to bacteriolysis has been arranged to be switched to the longitudinal direction of the flow path, probability for a bacterial gene and a particulate carrier to meet each other is enhanced, and many bacterial genes can be adsorbed efficiently to the particulate carrier.

### BRIEF DESCRIPTION OF THE DRAWINGS

Fig. 1 is a plan view showing a schematic structure of a chip in an embodiment of a micro-reactor for gene inspection of the invention.
Fig. 2(a) is a cross-sectional view showing an example of a piezoelectric pump, Fig. 2(b) is a top view of the piezoelectric pump and Fig. 2(c) is a cross-sectional view showing another example of the piezoelectric pump.

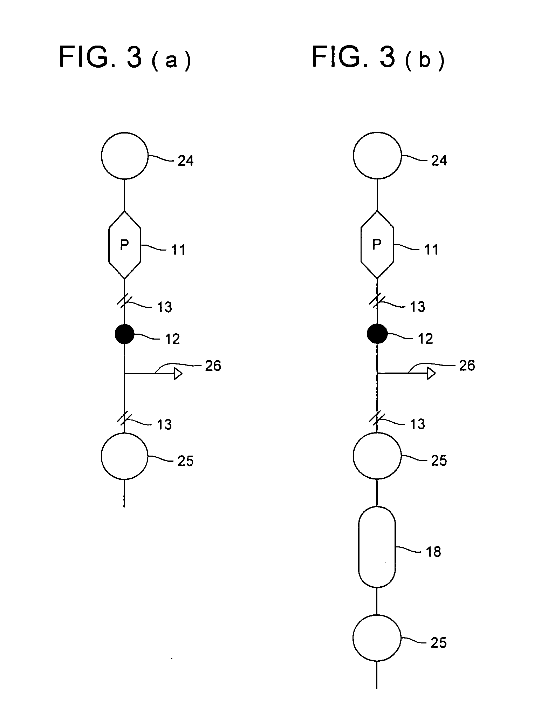

Each of Fig. 3(a) and Fig. 3(b) is a diagram showing the structure in the vicinity of the connection section between a pump and a chip when a piezoelectric pump is made to be separate from the chip.

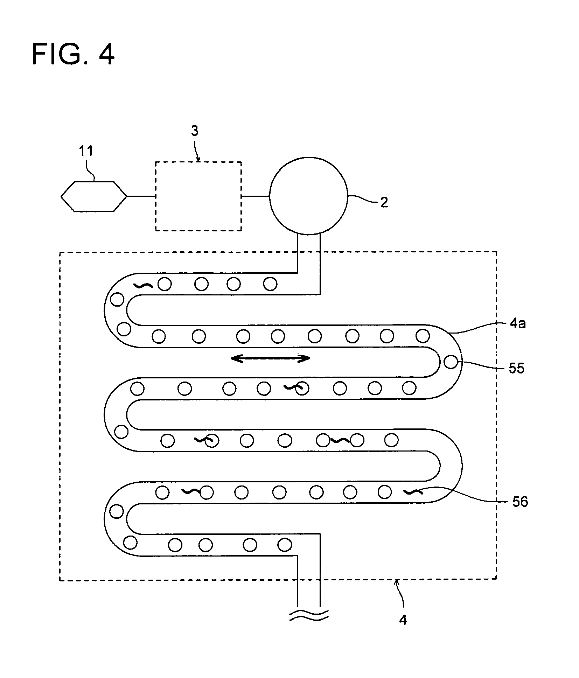

Fig. 4 is a diagram illustrating the structure wherein a bacterial gene coming out of a specimen through bacteriolysis is adsorbed to a carrier of a carrier filling section.

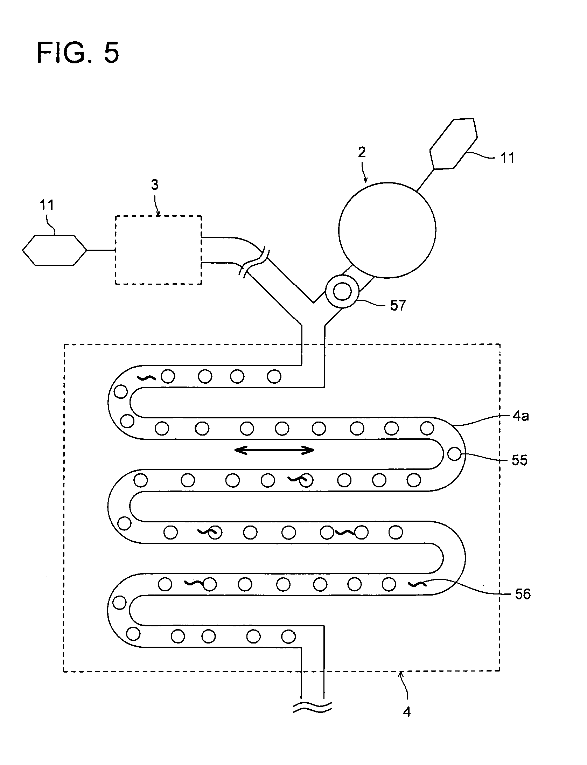

Fig. 5 is a diagram illustrating another structure wherein a bacterial gene coming out of a specimen through bacteriolysis is adsorbed to a carrier of a carrier filling section.

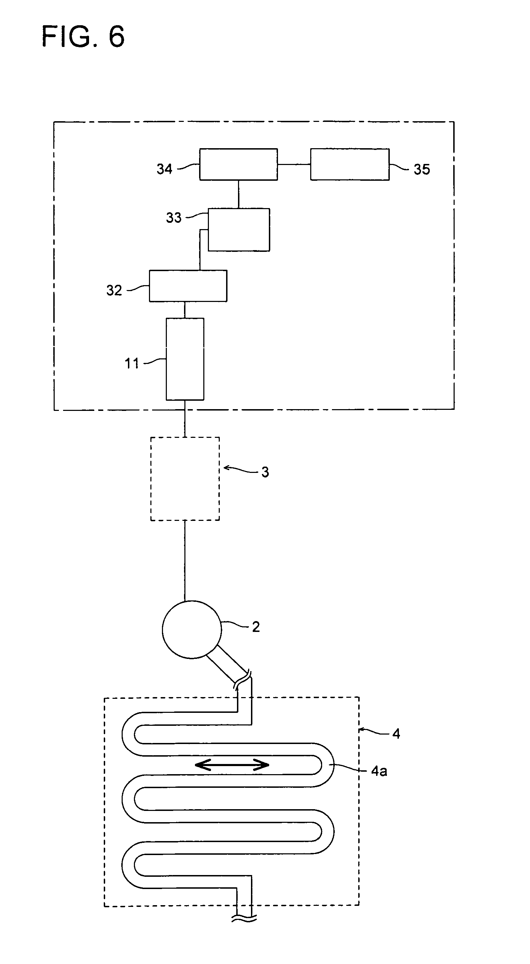

Fig. 6 is a diagram illustrating a control system that switches liquid-feeding of a liquid that contains a bacterial gene in a carrier filling section in the longitudinal direction repeatedly.

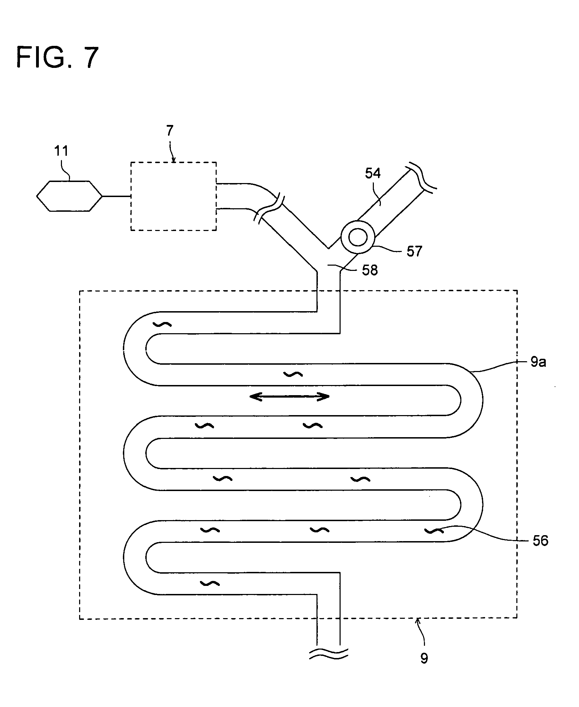

Fig. 7 is a diagram showing an example of a flow path structure that conducts mixing and reaction between specimen processing solution and reagent.

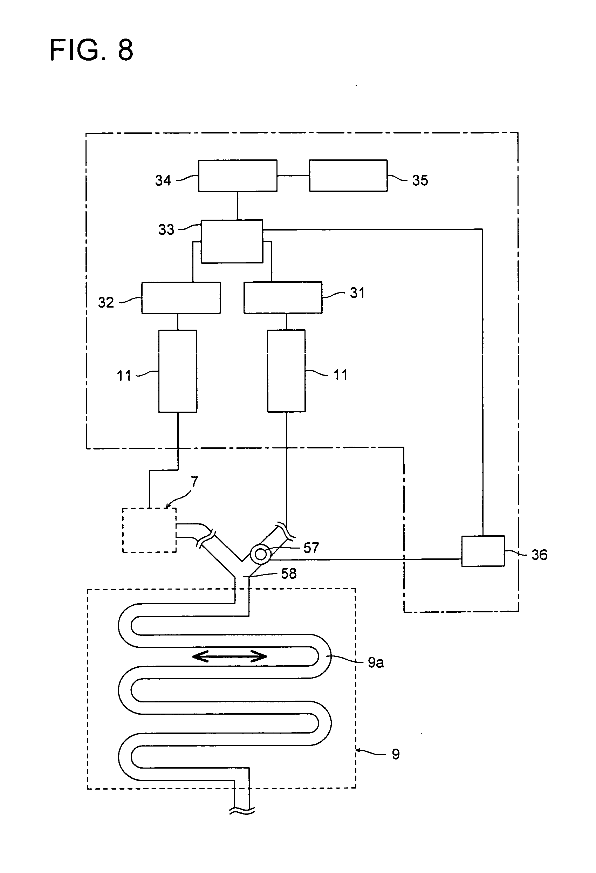

Fig. 8 is a diagram illustrating a control system that switches liquid-feeding of a merged liquid between a specimen processing solution introduced in a micro flow path and a reagent in the longitudinal direction repeatedly.

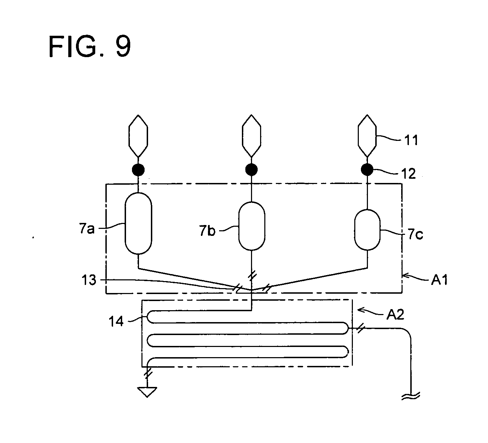

Fig. 9 is a diagram showing an example of the structure of an amplification reagent storage section and a reagent mixing section.

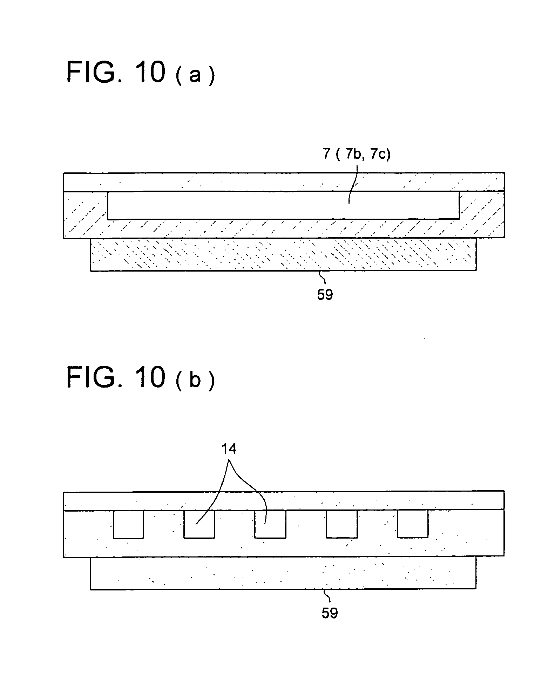

Each of Fig. 10(a) and fig. 10(b) is a cross-sectional view showing the state wherein Peltier element is provided on a chip bottom surface in each of the amplification reagent storage section and the reagent mixing section.

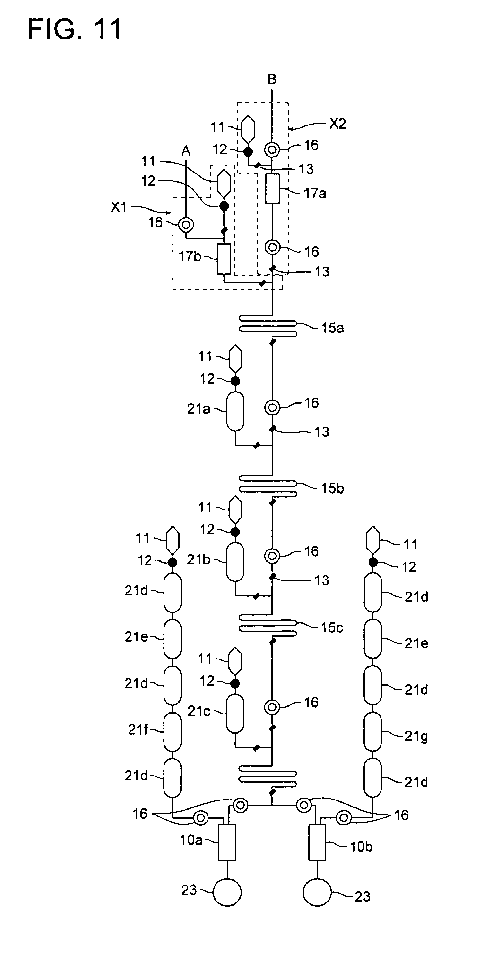

Fig. 11 is a diagram showing a flow path structure in the vicinity of the reaction section and the detection section which detect the amplification detection by ICAN method through the aforesaid method.

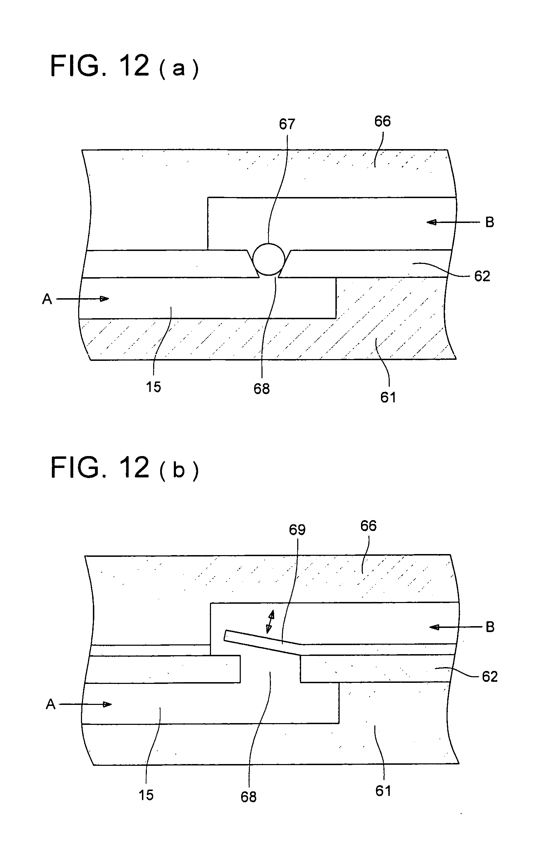

Each of Fig. 12(a) and Fig. 12(b) is a cross-sectional view showing an example of a check valve used for a flow path of a micro-reactor.

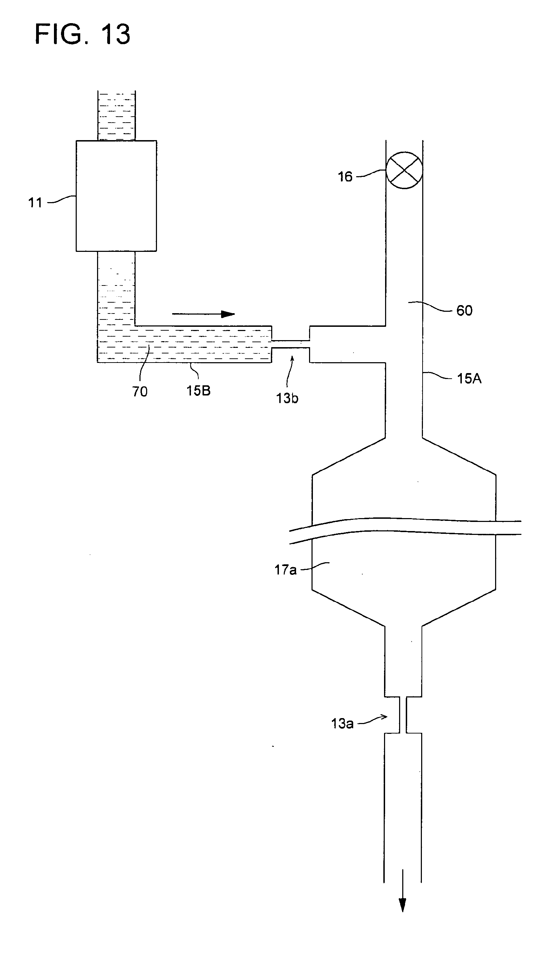

Fig. 13 is a cross-sectional view illustrating a quantitative liquid-feeding mechanism employing a check valve.

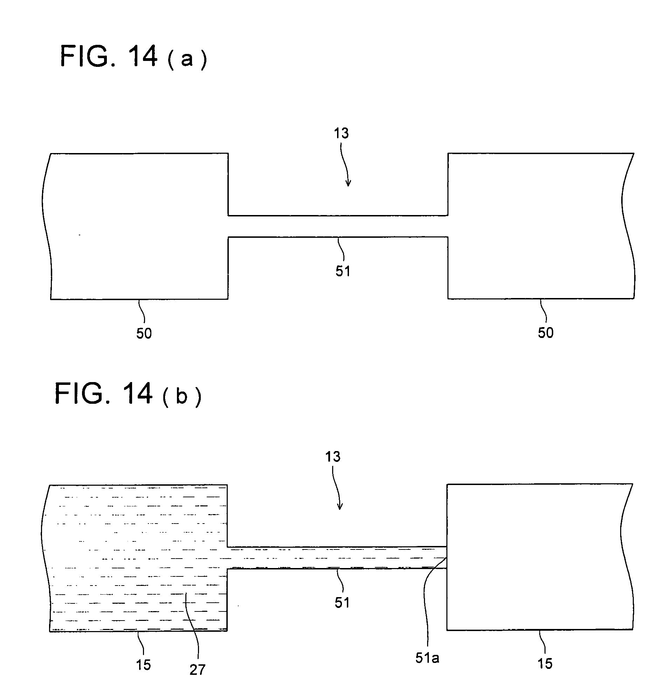

Fig. 14 is a diagram illustrating a structure of a hydrophobic valve.

### BEST MODE FOR CARRYING OUT THE INVENTION

The micro-reactor for gene inspection of the invention is characterized in that the reaction section is composed of a minute flow path that is located to be beyond the joining section where a processing solution that processed the specimen preliminarily and a reagent stored in the amplification reagent storage section join, and there is provided a control means that allows the merged liquid to move longitudinally repeatedly at the reaction section, by switching the liquid-feeding direction of the merged liquid containing respective liquids fed to the reaction section.

In the invention stated above, probability for a bacterial gene and a reagent to meet each other is enhanced, and a speed of reaction is improved, because the liquid-feeding direction for the merged liquid including a processing solution that processed preliminarily in the carrier filling section and a reagent is changed in the reaction section to allow the merged liquid to move longitudinally, for the amplification reaction. If the reaction section is made to be a minute flow path, a flow speed gradient is caused by viscosity from the central portion of the flow path toward the inner wall of the flow path. Under this condition, diffusion of the reagent by liquid-feeding switched to the longitudinal direction of the flow path becomes two-dimensional one, whereby, probability for the bacterial gene and reagent to meet each other is raised.

Incidentally, it is preferable that switching of the liquid-feeding direction in the carrier filling section or in the reaction section is carried out by using a micro-pump that is provided with a first flow path whose flow path resistance varies depending on a pressure difference, a second flow path whose changing rate of flow path resistance for changes of the pressure difference is smaller than that in the first flow path, a pressure chamber connected to both the first flow path and the second flow path, an actuator that changes inner pressure of the pressure chamber and a driving device that drives the actuator.

The micro-reactor for gene inspection of the invention is one in which a specimen injected in a specimen storage section or a processing solution that conducted preliminary processing of the specimen and a reagent stored in an amplification reagent storage section are fed to a reaction section to conduct gene amplification reaction, and then, operations to detect the gene amplification reaction in the detecting section are conducted in a chip that is connected to the respective sections through micro flow paths, wherein a bacteriolysis reagent storage section that stores bacteriolysis reagent which gives bacteriolysis to a bacterial cell in the specimen, a carrier filling section in which particulate carriers adsorbing bacterial gene that is subjected by the bacteriolysis reagent to bacteriolysis are filled in micro flow paths, a cleaning fluid storage section that stores cleaning fluid to be fed to the carrier filling section after the bacterial gene is adsorbed by the carrier, and an extracted reagent storage section that stores a gene extracting reagent which extracts the bacterial gene adsorbed on the carrier are provided in the chip, and a check valve is provided in at least one of micro flow paths through which the respective sections are communicated.

In the aforesaid invention, a bacterial cell in the specimen is subjected to bacteriolysis as a preliminary processing for the specimen, and washing is conducted under the condition that the genes are adsorbed on particulate carriers, then, adsorbed genes are eluted by an extraction liquid to be fed to the reaction section so that gene amplification reaction is carried out. Thus, it is possible to obtain efficiently and rapidly the preliminary processing liquid suitable for the amplification reaction.

In addition, a check valve is provided at an appropriate position in the flow path between each storage section and the carrier filling section, whereby a backward flow of a liquid at the aforesaid position can be prevented, and predetermined liquid-feeding can be conducted accurately.

As a preferable position for providing a check valve, when providing a mechanism described later for determining a processing liquid for reagent or specimen, the position for the mechanism, or, an appropriate position for preventing contamination since an influence by contamination such as cross contamination is extremely serious in a PCR method, or a position in the vicinity of a connection section between a micro-pump and a chip on the downstream side, can be given.

The micro-reactor for gene inspection of the invention is one in which a specimen injected in a specimen storage section or a processing solution that conducted preliminary processing of the specimen and a reagent stored in an amplification reagent storage section are fed to a reaction section to conduct gene amplification reaction, and then, operations to detect the gene amplification reaction in the detecting section are conducted in a chip that is connected to the respective sections through micro flow paths, wherein a bacteriolysis reagent storage section that stores bacteriolysis reagent which gives bacteriolysis to a bacterial cell in the specimen, a carrier filling section in which particulate carriers adsorbing bacterial gene that is subjected by the bacteriolysis reagent to bacteriolysis are filled in micro flow paths, a cleaning fluid storage section that stores cleaning fluid to be fed to the carrier filling section after the bacterial gene is adsorbed by the carrier, and an extracted reagent storage section that stores a gene extracting reagent which extracts the bacterial gene adsorbed on the carrier are provided in the chip, and there is provided a cooling means that cools a reagent mixing section where reagents coming from the amplification reagent storage section and/or plural amplification reagent storage sections are mixed.

As the above-mentioned cooling means, Peltier element is preferable.

In the invention mentioned above, a bacterial cell in the specimen is subjected to bacteriolysis as a preliminary processing for the specimen, and washing is conducted under the condition that the genes are adsorbed on particulate carriers, then, adsorbed genes are eluted by an extraction liquid to be fed to the reaction section so that gene amplification reaction is carried out. Thus, it is possible to obtain efficiently and rapidly the preliminary processing liquid suitable for the amplification reaction.

Since the amplification reagent storage section and the reagent mixing section are cooled by a cooling means such as Peltier element in the aforesaid invention, degeneration of reagents caused by temperature can be prevented. In particular, in the case of PCR amplification, a temperature control to rise or lower temperature among three temperatures is necessary, and even in the case of the structure to apply ICAN (Isothermal chimera primer initiated nucleic acid amplification) method, the reaction section needs to be 50 - 65°C. Therefore, the reagent is heated to be degenerated easily in the course of temperature rise in the reaction section and in the course of reagent mixing. However, this can be prevented by providing Peltier element on the surface or the under surface or both surfaces of each chip on each of the amplification reagent storage section and the reagent mixing section to cool them.

The micro-reactor for gene inspection of the invention is one in which a specimen injected in a specimen storage section or a processing solution that conducted preliminary processing of the specimen and a reagent stored in an amplification reagent storage section are fed to a reaction section to conduct gene amplification reaction, and then, operations to detect the gene amplification reaction in the detecting section are conducted in a chip that is connected to the respective sections through micro flow paths, wherein a bacteriolysis reagent storage section that stores bacteriolysis reagent which gives bacteriolysis to a bacterial cell in the specimen, a carrier filling section in which particulate carriers adsorbing bacterial gene that is subjected by the bacteriolysis reagent to bacteriolysis are filled in micro flow paths, a cleaning fluid storage section that stores cleaning fluid to be fed to the carrier filling section after the bacterial gene is adsorbed by the carrier, and an extracted reagent storage section that stores a gene extracting reagent which extracts the bacterial gene adsorbed on the carrier are provided in the chip, and the bacterial gene and internal control are amplified simultaneously in the reaction section, and these are detected respectively in a separate detection section.

In the invention mentioned above, a bacterial cell in the specimen is subjected to bacteriolysis as a preliminary processing for the specimen, and washing is conducted under the condition that the genes are adsorbed on particulate carriers, then, adsorbed genes are eluted by an extraction liquid to be fed to the reaction section so that gene amplification reaction is carried out. Thus, it is possible to obtain efficiently and rapidly the preliminary processing liquid suitable for the amplification reaction.

Further, both internal control for judging false negative of gene amplification reaction caused by inhibiting substances and a preliminary processing liquid for a specimen are subjected to amplification reaction, and the solution after the reaction is divided to be fed to separate detection sections after conducting proper processing in case of need, so that the amplification of the bacterial gene may be detected in the detection section on one side, and the amplification of the internal control may be detected in the other detection section. Thus, it is possible to conduct highly reliable inspection rapidly in the simple structure.

The present invention makes it possible to offer a micro-reactor for gene inspection suitable for detection of bacteria or viruses wherein general-purpose properties and high sensitivities are secured, low cost properties with a disposable type are realized, detection at high accuracy can be carried out in the simple structure, and preliminary processing suitable for amplification reaction can be conducted for a specimen efficiently and rapidly.

In the present specifications, "a gene" means DNA or RNA carrying genetic information developing some functions, but it sometimes refers to DNA or RNA which is simply a chemical entity.

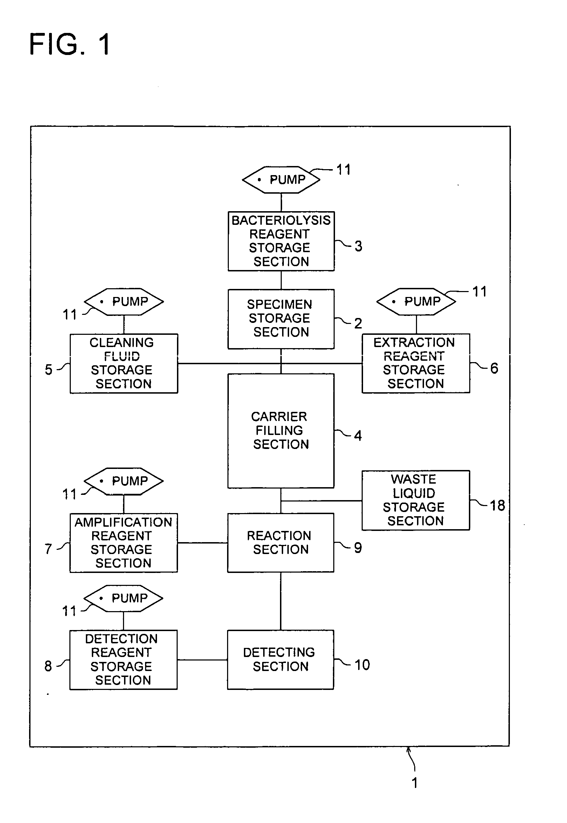

An embodiment of the invention will be explained as follows, referring to the drawings. Fig. 1 is a plan view showing a schematic structure of a chip in an embodiment of a micro-reactor for gene inspection of the invention. The micro-reactor for gene inspection in the present embodiment is composed of illustrated chip 1 and an apparatus main body equipped with a micro-pump for feeding a liquid, a control system relating to respective controls for liquid-feeding, temperatures and reactions, an optical detection system, and a processing system taking data collection and data processing in its charge.

Constituting elements other than the chip 1 can be united solidly to be an apparatus main body so that the chip 1 may be mounted on or dismounted from the apparatus main body. Though the micro-pump can be provided on the chip 1, it is also possible to incorporate it in the apparatus main body so that a connecting section on the chip 1 for pump may be connected to the micro-pump on the apparatus main body, when the chip 1 is mounted on the apparatus main body.

The chip 1 is one made of resin, glass, silicon or ceramic on which a flow path and others are formed through microscopic processing technique, and it measures, for example, several tens mm in length and in width and several mm in height. A minute flow path formed on the chip 1 measures, for example, about 10 µm - several hundreds µm in width and in height.

A liquid in each of bacteriolysis reagent storage section 3, cleaning fluid storage section 5, an extracted reagent storage section 6, amplification reagent storage section 7 and detection reagent storage section 8 is fed by micro-pump 11 communicated with each storage section. The micro-pump 11 can be connected to each storage section, when a chip-shaped pump unit on which a single or plural micro-pumps are formed through photolithography technology and a chip on which flow paths for preliminary processing, reaction and for detection as illustrated are formed are superposed so that their surfaces face each other.

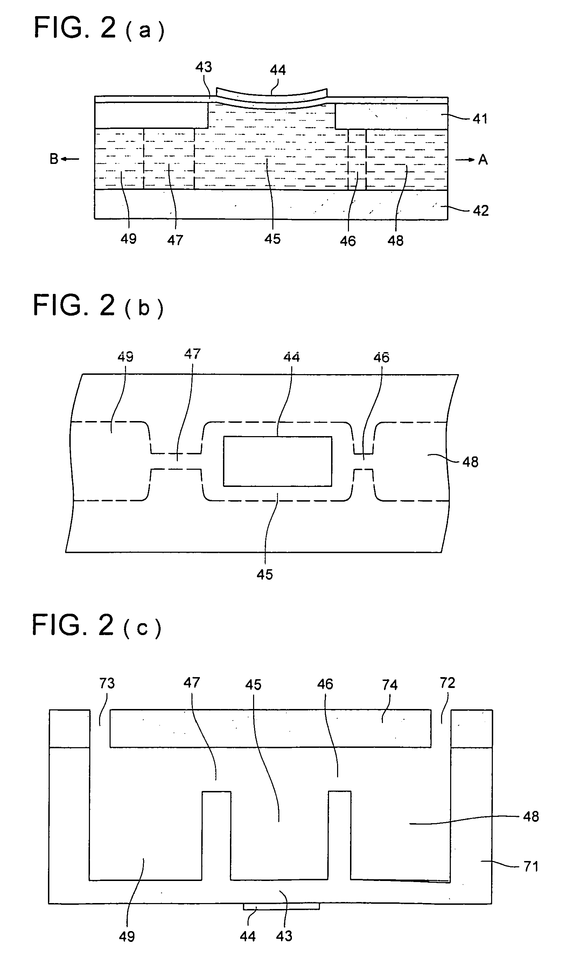

Though various types of pumps including a check-valve-type pump in which a check valve is provided at a flow-in and flow-out port of a valve chamber provided with an actuator can be used as micro-pump 11, it is preferable that a piezoelectric pump is used. Fig. 2(a) is a cross-sectional view showing an example of a piezoelectric pump and Fig. 2(b) is a top view of the piezoelectric pump. On this micro-pump, there are provided substrate 42 on which first liquid chamber 48, first flow path 46, pressure chamber 45, second flow path 47 and second liquid chamber 49 are formed, upper substrate 41 laminated on the substrate 42, vibration plate 43 laminated on the upper substrate 41, piezoelectric element 44 laminated on the side facing the pressure chamber 45 of the vibration plate 43 and a driving section (not shown) for driving the piezoelectric element 44.

In this example, photosensitive glass substrate having a thickness of 500 µm is used as substrate 42, and first liquid chamber 48, first flow path 46, pressure chamber 45, second flow path 47 and second liquid chamber 49 are formed by conducting etching to the depth of 100 µm. A width of the first flow path 46 is 25 µm and a length is 20 µm. A width of the second flow path 47 is 25 µm and a length is 150 µm.

A top face on each of the first liquid chamber 48, first flow path 46, second liquid chamber 49 and second flow path 47 is formed by laminating the upper substrate 41 on the substrate 42. A portion on pressure chamber 45, corresponding to the top of the pressure chamber 45 is processed by means of etching to become a through hole.

On the top surface of the upper substrate 41, there is laminated vibration plate 43 composed of a 50 µm-thick thin sheet glass, and piezoelectric element 44 composed of a 50 µm-thick lead titanate zirconate (PZT) ceramics is laminated on the vibration plate 43.

The piezoelectric element 44 and the vibration plate 43 attached on the piezoelectric element 44 are vibrated by driving voltage coming from a driving section, and thereby a volume of the pressure chamber 45 is increased or decreased. The first flow path 46 and the second flow path 47 are the same in terms of a width and a depth, and a length of the second flow path is longer than that of the first flow path, and when the pressure difference grows greater in the first flow path 46, an eddy flow is generated to flow in whirls in the flow path, and flow path resistance is increased. On the other hand, in the second flow path 47, even when the pressure difference grows greater, a laminar flow still stays because a flow path length is greater, thus, a rate of change of flow path resistance for a change of pressure change is small, compared with the first flow path.

For example, when vibration plate 43 is moved quickly toward the inside of the pressure chamber 45 by driving voltage for the piezoelectric element 44 to reduce a volume of the pressure chamber 45 while giving a large pressure difference, and then, when vibration plate 43 is moved slowly toward the outside of the pressure chamber 45 while giving a small pressure difference to increase a volume of the pressure chamber 45, a liquid is fed in the direction A in the same drawing.

Meanwhile, a difference of a rate of change of flow path resistance for a change of pressure difference between the first flow path and the second flow path does not need to be caused by a difference of a flow path length, and it may also be one based on another difference in shapes.

In the piezoelectric pump structured as in the foregoing, a direction for feeding a liquid and a liquid-feeding speed can be controlled by changing driving voltage and frequency for the pump. Another example of the pump is shown in Fig. 2(c). In this example, the pump is composed of silicon substrate 71, piezoelectric element 44 and an unillustrated flexible wiring. The silicon substrate 71 is one wherein a silicon wafer is processed by photolithography technologies to be in a prescribed shape, and pressure chamber 45, vibration plate 43, first flow path 46, first liquid chamber 48, second flow path 47 and second liquid chamber 49 are formed on the silicon substrate 71 by means of etching. On the first liquid chamber 48, there is formed port 72, and on the second liquid chamber 49, there is formed port 73, and when this piezoelectric pump is provided to be separate from chip 1 in Fig. 1, for example, the piezoelectric pump is made to be communicated with a portion for connection with the pump on the chip 1 through the ports 72 and 73. For example, the pump can be connected with the chip 1 by superposing substrate 74 on which ports 72 and 73 are formed and the vicinity of a portion for connection with the pump on the micro-reactor vertically. Further, as stated above, it is also possible to form plural pumps on a single silicon substrate. In this case, it is preferable that a driving liquid tank is connected with the port which is on the opposite side of the port connected with the chip 1. When there are plural pumps, ports of these pumps may also be connected to the common driving liquid tank.

Each of Fig. 3(a) and Fig. 3(b) shows the structure of the vicinity of a portion for connection with the pump on the chip 1 in the case where the piezoelectric pump is made to be separate from chip 1 in Fig. 1. Fig. 3(a) shows the structure of the pump portion that feeds driving liquid and Fig. 3(b) shows the structure of the pump portion that feeds amplification reagent. In this case, the numeral 24 represents a storage section for a driving liquid, and the driving liquid may either oil system such as a mineral oil or water system. The numeral 25 represents a storage section for a sealing liquid. This sealing liquid is one for preventing that a reagent leaks out to a micro flow path to react, and it is solidified or gelatinized under the cold storage condition in which micro-reactor (µ-TAS) chips are kept before they are used, and it melts and is fluidized when it is kept at a room temperature to be used. Though air may exist between the sealing liquids and amplification reagents, it is preferable that an amount of air existing (for an amount of reagents) is less enough, from the viewpoint of quantitative liquid-feeding. Further, the sealing liquid may be filled either in the micro flow path or in a reservoir section provided for the sealing liquid.

Air-venting flow path 26 is provided in the flow path between connecting section for pump 12 and amplification reagent storage section 7. This air-venting flow path 26 is branched from the flow path between connecting section for pump 12 and amplification reagent storage section 7, and its end is made to be open. Air bubbles existing in the flow path are removed from this air-venting flow path 26 when connecting to the pump, for example.

From the viewpoint of preventing that an aqueous liquid such as water leaks out, for example, it is preferable that the air-venting flow path 26 is not more than 10 µm in terms of its flow path diameter, and an angle of contact formed between an inner surface of the flow path and water is 30° or more.

The numeral 13 represents a hydrophobic valve having the structure shown in Fig. 14, and this hydrophobic valve 13 intercepts a passage of a liquid until the liquid-feeding pressure in the positive direction arrives at a predetermined pressure, and it allows a liquid to pass when the liquid-feeding pressure that is not less than the predetermined pressure is applied to the valve. As is illustrated, the hydrophobic valve 13 is composed of a flow path portion where the flow path is narrowed in terms of diameter, and owing to this, the passage to the other end side of liquid 27 shown in Fig. 14(b) arriving at the narrowed flow path 51 from one end side is regulated. This narrowed flow path 51 is formed to be in a shape measuring about 200 µm in length and about 30 µm in width, for the flow path connected to both sides in series measuring 200 µm in length and 200 µm in width, for example.

When extruding liquid 27 from the end portion of the narrowed flow path 51 having a small section to the flow path 50 having a large section, a prescribed liquid-feeding pressure is needed because of the surface tension. Therefore, suspension and passage of a liquid can be controlled by pumping pressure generated by a micro-pump, whereby, it is possible to stop a movement of a liquid temporarily at a prescribed position in the flow path, for example, and to start liquid-feeding again to the flow path beyond the aforesaid position at desired timing.

As occasion demands, water-repelling coating, such as, for example, fluorine-based coating may also be applied on an inner surface of the narrowed flow path 51.

### <Preliminary processing for specimen>

Specimens such as, for example, whole blood, blood serum, Buffy coat, urine, dejection, salvia, phlegm and other liquids are injected from specimen storage section 2. Detectable bacteria or viruses contained or possibly contained in these specimens are not limited in particular. If a gene of bacteria or virus, preferably, an inherent DNA array of bacteria or virus is known, PCR primer for the gene or the DNA array can be made by known technology, whereby, both of them can be detected. As a concrete example, tuberculosis germs, MRSA, influenza virus and new type infectious disease are given. An amount of necessary specimen, for example, is 0.001 - 100 ng as DNA.

As shown in Fig. 4, the specimen injected in specimen storage section 2 is mixed with a bacteriolysis reagent like a water solution contain, for example, lysozyme which is fed by piezoelectric pump 11 connected to bacteriolysis reagent storage section 3, and a bacterial cell in the specimen is lysed. AS a bacteriolysis reagent, it is possible to use optional ones which are widely known. A bacterial gene which has been lysed and ejected out of the bacterial cell is adsorbed to fine-grain-shaped carrier 55 filled in micro flow path 4a of carrier filling section 4.

As the carrier 55, beads or powder composed of glass, silica gel, hydroxy apatite and celite can be used. AS an example, glass beads each having a particle size of 0.05 - 1000 µm are filled in the micro flow path 4a at the density level of 0.05 g/ml - 1.3 g/ml.

Preferably, micro pump 11 is driven so that the liquid-feeding direction for a liquid containing bacterial gene fed to carrier filling section 4 may be switched to a longitudinal direction as shown by an arrow in the same drawing, and the liquid may make fore-and-aft movements repeatedly in the flow path direction in the carrier filling section 4. Owing to this, a probability for bacterial gene 56 and fine-grain-shaped carrier 55 to meet each other is enhanced, which raises an efficiency for a large number of bacterial genes 56 to be adsorbed on the fine-grain-shaped carrier 55 in a short period of time. For example, reciprocating motions with an amplitude of 5 mm and a cycle of 5 seconds may be carried out, though it depends on circumstances.

Fig. 6 is a diagram showing the control system of liquid-feeding micro pump 11 for the fore-and-aft movements of a liquid containing bacterial gene in carrier filling section 4. As illustrated, the liquid-feeding micro pump 11 is connected to micro computer 34 through amplifier 32 and D/A converter 33. The micro computer 34 is provided with timer 35, and it controls liquid-feeding of liquid-feeding micro pump 11 at timing programmed in advance. Incidentally, though systems 32 - 35 each controlling the micro pump 11 may be located in the chip, they may also be incorporated in the micro-reactor apparatus main body so that a connecting section on the chip 1 for pump may be connected to the micro-pump on the apparatus main body, when the chip 1 is mounted on the apparatus main body, for the operation control.

Fig. 5 is a diagram showing another example of a liquid-feeding system in each of the specimen storage section, bacteriolysis reagent storage section and the carrier filling section. As illustrated, liquid-feeding for specimen from specimen storage section 2 and liquid-feeding for bacteriolysis reagent from bacteriolysis reagent storage section 3 may be controlled separately, by connecting micro pump 11 also to specimen storage section 2. In this case, when making the liquid containing bacterial gene introduced in carrier filling section 4 to conduct fore-and-aft movements, by providing valve 57 such as a check valve in the micro flow path on the specimen storage section 2 side, for example, the valve 57 is closed, and switching of liquid-feeding is carried out by micro pump 11 connected to the bacteriolysis reagent storage section 3.

After bacterial genes are adsorbed on particulate carriers in the carrier filling section 4, cleaning fluid such as a Tris-EDTA-NaCl mixed solution, for example, is fed from cleaning fluid storage section 5, to pass through the carrier filling section 4 for sufficient cleaning. Then, a valve (not shown) such as an active valve provided in the vicinity of branching section 31 is switched to feed extracted reagent such as Tris-EDTA buffer solution, for example, from the extracted reagent storage section 6 to the carrier filling section 4, thus, bacterial genes adsorbed on particulate carriers are eluted to be fed to reaction section 9 as a preliminary solution.

Meanwhile, when bacterial gene is RNA, it is converted into cDNA by the use of an appropriate transcriptase enzyme, and then, gene amplification reaction is conducted.

### <Gene amplification reaction and detection>

A specimen processing liquid which has conducted preliminary processing on the specimen and amplification reagent coming from amplification reagent storage section 7 are sent to reaction section 9 so that gene amplification reaction is conducted. The reaction section 9 may either be a broad liquid reservoir or be a micro flow path, according to circumstances.

A plurality of amplification reagent storage sections 7 are provided corresponding to plural reagents, and mixing between reagents and mixing of specimen processing liquid and reagent may either be conducted at a single mixing section with a desired ratio, or be conducted so that desired mixing ratio may be obtained finally, by dividing either one or both of them and thereby by providing plural junctions.

Fig. 9 shows an example of the structure for an amplification reagent storage section and a reagent mixing section. As shown in the drawing, micro pump (piezoelectric pump in the example) 11 is connected to each of amplification reagent storage sections 7a, 7b and 7c, and reagent mixing section 14 is provided at a location beyond the junction point where flow paths coming from respective storage sections meet. Each of these respective portions is cooled by Pertier element. Namely, Pertier element 59 is provided on the lower surface of the chip as shown in Fig. 10(a) in area A1 where amplification reagent storage sections 7a, 7b and 7c are provided in Fig. 9, and Pertier element 59 is also provided on the lower surface of the chip as shown in Fig. 10(b) in area A2 where reagent mixing section 14 is provided in Fig. 9.

Pertier element 59 may be provided either on the upper surface or on both upper and lower surfaces of the chip of each section. By cooling both amplification reagent storage section 7 and reagent mixing section 14, degeneration of reagent caused by warming can be prevented. In particular, in the case of PCR amplification, a temperature control for raising or lowering temperature among three temperatures is needed. Further, even in the case of the structure employing ICAN (Isothermal chimera primer initiated nucleic acid amplification) method for gene amplification, reagent is warmed to degenerate easily in the course of raising temperature in the reaction section or in the course of reagent mixing, because the amplification reaction section needs to be warmed up to 50 - 65°C, which, however, can be prevented by cooling by providing Pertier element as shown in Fig. 10(a) and Fig. 10(b). Usually, degeneration of samples can be prevented sufficiently, if both the amplification reagent storage section 7 and reagent mixing section 14 are kept at about 4°C or less.

It is preferable that reagents are stored in the amplification reagent storage section 7 in advance so that inspection may be made rapidly independently of place and time. To prevent evaporation, leakage, inclusion of air bubbles, contamination and degeneration, the surface of the reagent is processed to be sealed hermetically, and it is sealed by sealing material (sealing solution). These sealing materials (to be stored in sealing solution storage section 25 in Fig. 3(a) and Fig. 3(b)) are those solidified or gelatinized under the cold storage condition in which the micro-reactor (µ-TAS) chip is kept before use, and are fused to be in the fluid state if they are kept at room temperature when they are used. As the sealing material of this kind, there are given fats and fatty oils wherein refractory plastic substance can be used for water, solubility for water is 1% or less and a melting point is 8°C - room temperature (25°C), and aqueous solution of gelatin. A temperature for gelatinization of the aqueous solution of gelatin can be adjusted by changing concentration of gelatin, and for example, the aqueous solution of about 1% of gelatin is preferable to gelatinize at about 10°C.

Gene amplification reactions conducted in the reaction section 9 will be explained as follows.

### · Amplification method

In the case of a micro-reactor of the present invention, the amplification method is not limited. For example, it is possible to use a PCR amplification method which is used extensively in many fields as DNA amplification technology. Various conditions for practicing the amplification technology have been studied in detail, and are described in various documents together with various variations and improved points. In the PCR amplification, a temperature control to rise or lower temperature among three temperatures is necessary, and a flow path device capable of controlling temperature that is suitable to a micro chip has already been proposed by the inventors of the present invention (TOKKAI No. 2004-108285). This device system can be applied to a flow path for amplification of the chip of the invention. Owing to this, DNA amplification can be done in much less period of time than in a conventional system to conduct by a micro tube, or a micro vial manually, because a heat cycle can be switched to high speed and a micro flow path is made to be a micro reaction cell whose heat capacity is small.

An ICAN (Isothermal chimera primer initiated nucleic acid amplification) method which has been developed and does not require complicated temperature control unlike the PCR reaction is characterized in that DNA amplification can be conducted in a short period of time under an optional fixed temperature in a range of 50 - 65°C (Patent No. 3433929). Therefore, the ICAN method is an ideal amplification technology because it requires only simple temperature control in the micro-reactor in the invention. The present method that requires one hour in the case of manual operations requires only 10 - 20 minutes, preferably, 15 minutes in the bio-reactor, including analyses.

The DNA amplification reaction may also be other PCR variations, and the micro-reactor of the invention has flexibility to cope with all cases through design changes for the flow path. Even when using any DNA amplification reaction, details of that technology are disclosed, and those skilled in the art can introduce the technology easily.

### · Reagents

### (i) Primer

PCR primer represents two types of oligonucleotide which are complementary at both ends of DNA chain of specific region to be amplified. With respect to the design for them, an exclusive application has already been developed, and those skilled in the art can make them easily through DNA synthesizer and chemical synthesis. The primer for the ICAN method is chimera primer of DNA and RNA, and a manufacturing method for this has already been established technically (Patent No. 3433929). As for design and selection of the primer, it is important to use the most appropriate one, because it has an influence on whether the amplification reaction is successful or not and on efficiency of the amplification reaction.

If biotin is made to be coupled with PCR primer, DNA of amplification by-product can be immobilized on a substrate through coupling with streptoavidin on the chip substrate, which can contribute to a fixed quantity of amplification by-product. As other primer-labeled substances, digoxigenine and various types of fluorescent dyes are exemplified.

### (ii) Reagents for amplification reactions

Regarding reagents including enzyme to be used for amplification reaction, both of PCR method and ICAN method are available easily.

As reagents in the PCR method, at least Taq DNA polymerase, Vent DNA polymerase, or Pfu DNA polymerase are included, in addition to 2'-deoxynucleoside 5'-triphosphoric acid.

Reagents in the ICAN method include at least 2'-deoxynucleoside 5'- triphosphoric acid, chimera primer which can be hybridized peculiarly on a gene to be detected, DNA polymerase having chain substitution activity and R Nase of endonuclease.

### (iii) Control

Internal control is used as monitoring of amplification, or as internal standard substance in the case of a fixed quantity, regarding target nucleic acid (DNA, RNA). Since the arrangement of the internal control has an arrangement wherein a primer that is the same as a primer for specimen can be hybridized on both sides of the arrangement that is different from the specimen, it can be amplified in the same way as in the specimen.

An arrangement of positive control is a peculiar arrangement that detects a specimen, and an arrangement between a portion where a primer is hybridized and the aforesaid arrangement is the same as that of specimens. As nucleic acids (DNA, RNA) used for control, those described in known technical documents can be used. Negative control includes reagents other than nucleic acids (DNA, RNA) and all others which are used for checking the presence or absence of contamination, and for correction of background.

### (iv) Reagents for reversal transfer

In the case of samples of RNA, there are included reversal transfer enzyme and reversal transfer primer for synthesizing cDNA from RNA, and they are on the market and are easily available.

Fig. 7 is a diagram showing an example of a flow path structure that conducts mixing and reaction between specimen processing liquid and reagents. As illustrated, specimen processing liquid fed by micro-pump (not shown) from specimen processing liquid side flow path 54 and reagents,fed by micro-pump 11 from reagent storage section 7 join at junction point 58 of Y-shaped flow path, and are fed to succeeding micro flow path 9a.

The micro flow path 9a is made to have a width of 0.2 mm and a depth of 0.2 mm, for example, and ICAN reactions are shown in the micro flow path 9a.

After filling specimen processing liquids and reagents in the micro flow path 9a, micro-pump 11 that feeds reagents is driven in a way to switch its liquid-feeding direction repeatedly so that a merged liquid in the micro flow path 9a may be made to move longitudinally, thus, ICAN reactions are carried out. For example, when the micro flow path 9a measures 0.2 mm in width and 0.2 mm in depth, and an amount of liquid is 25 µl, reciprocating motions with an amplitude of 25 mm and a cycle of 5 seconds may be carried out.

Owing to this longitudinal movement, reagents and specimens in the micro flow path 9a are subjected to diffusive mixing, and a flow speed gradient between a central portion of the flow path and a portion in the vicinity of a wall surface of the flow path enhances a probability for DNA and reagents to meet, and improves the reaction speed.

Further, if valves 57 such as a check valve and an active valve are provided in flow path 54 closer to the specimen processing liquid in a way that the valves are closed in the course of mixing, and the merged liquid in the micro flow path 9a is made to move longitudinally by micro-pump 11 that feeds reagents, it is not necessary to arrange a separate micro-pump for mixing in the flow path. A piezoelectric pump shown in Fig. 2(a), Fig. 2(b) and Fig. 2(c) is suitable to the micro-pump 11.

Though the merged liquid is made to move longitudinally by the micro-pump 11 on one side alone in Fig. 7, it is also possible to make the merged liquid in the micro flow path 9a to carry out reciprocating movements by driving both the micro-pump closer to the specimen processing liquid and micro-pump 11 closer to the specimen storage section 7 without providing valve 57.

Fig. 8 is a diagram showing a control system for the micro-pump 11 for liquid-feeding and for the valve 57. AS illustrated, the micro-pump 11 for liquid-feeding is connected to micro-computer 34 through amplifier 32 and D/A converter 33.

Further, air cylinder 36 for opening and closing the valve 57 is connected to micro-computer 34 through D/A converter 33.

The micro-computer 34 is provided with timer 35, and it controls liquid-feeding by micro-pump 11 for liquid-feeding and opening and closing of the valve 57, at timing programmed in advance. These control sections may also be incorporated in the micro-reactor main body as stated above, so that operations are controlled when the pump-connection section of chip 1 is connected with the micro-pump of the apparatus main body.

After gene amplification reactions are carried out in the reaction section 9, amplification reactions are detected by detection section 10. Though this detection section 10 may serve also as the reaction section 9 under some circumstances, a separate detection section on which streptoavidin is adsorbed is used for detection, in the case of detection by gold colloid which will be described later. Further, it is preferable that amplification detection for bacterial genes and amplification detection for internal control are conducted separately by respective detection sections, by dividing amplification reaction liquid after internal control is subjected to amplification reaction simultaneously with bacterial genes. Detection reagent (for example, a gold colloid solution, luminescent reagent or the like) coming from detection reagent storage section 8 is fed to detection section 10 or to a flow path between reaction section 9 and detection section 10, to be mixed with or to be brought into contact with a reaction amplification liquid or a processed object.

In the present invention, a method to detect DNA of an amplified target gene is not limited in particular, and a suitable method is used as occasion demands. As the method of this kind, detection methods such as a visible spectrophotometry method, a fluorometry method and a phosphorescent luminescence method are mainly used. There are further given methods such as an electrochemical method, a surface plasmon resonance method and a quartz radiator micro-balance method. In these methods, equipment are more versatile, disturbing factors are less, measurement is more simple and data processing is easier, compared with a fluorometry method.

As a suitable detection method for reaction to be applied to the invention, there are given methods including the following processes.
(1) A process to amplify genes by making DNA of bacterial gene from specimen and biotin-modified primer to react in reaction section 9,
(2) A process to mix an amplification reaction liquid containing amplified genes and a denatured liquid and thereby to denaturation-processing the amplified genes to a single strand,
(3) A process to feed a processing liquid obtained by denaturation-processing the amplified genes to a single strand into a micro flow path on which streptoavidin is adsorbed and to immobilize the amplified gene,
(4) A process to let probe DNA whose very end is fluorescence-labeled with FITC (fluorescein isothiocyanate) to flow in a micro flow path where the amplified genes are immobilized, to hybridize this on the immobilized genes,
(5) A process to let gold colloid liquid whose surface has been modified with [anti-FITC antibody that combines peculiarly with FITC preferably, into the micro flow path, so that its gold colloid is adsorbed on FITC-modified probe hybridized on the immobilized genes and
(6) A process to measure optically the concentration of the gold colloid in the micro flow path.

In the aforesaid methods, biotin DNA, immobilization by biotin-streptoavidin coupling, FITC fluorescence labeling and FITC antibody are known technologies. It is also possible to employ a method in the order to immobilize in the micro flow path on which streptoavidin is adsorbed after hybridizing FITC labeled probe DNA on the amplified genes. In the present invention, the structure in the order where the aforesaid (3) comes first, and then (4) comes is preferable.

A process to feed a cleaning fluid in the flow path on which streptoavidin is adsorbed is preferably included between the aforesaid respective processes, as occasion demands. As the cleaning fluid of that kind, various types of buffer liquids, aqueous solutions of salts and organic solvents, for example, are appropriate.

In the processes stated above, the denatured liquid represents a reagent to make gene DNA to be a single strand, and there are given, for example, sodium hydroxide and potassium hydroxide. As a probe, there is given oligodeonucleotide. Further, in addition to FITC, there is given fluorescent substance such as RITC (Rhodamine isothiocyanate).

The preliminary processing, amplification and detection mentioned above are started under the condition that a chip is mounted on an apparatus main body on which software having various conditions established relating to liquid feeding order, a volume and timing, together with control of a micro-pump and temperature as contents of program, the aforesaid micro-pump, a detection device and a temperature control device are united solidly. After injecting samples, analyses are started, then, gene amplification reactions based on liquid-feeding for samples of reagents, preliminary processing and mixing, gene detection reactions and optical measurement are practiced automatically as a series of continuous processing, thus, measurement data are stored in a file together with necessary conditions and recorded items.

Fig. 11 is a diagram showing a reaction section that detects amplification reaction by ICAN method through the aforesaid method and a flow path structure in the circumference of a detection section. Reagents such as biotin-modified chimera primer hybridized peculiarly on genes to be detected, DNA polymerase having chain substitution activity, and endonuclease are stored in respective amplified reagent storage sections 7a, 7b and 7c in Fig. 9, and reagents are fed to flow path 14 on the downstream side from each reagent storage section by piezoelectric pump 11 located on the upstream side of each reagent storage section, to be mixed.

Reagents in total amount of over 7.5 µl, for example, are stored in respective reagent storage sections 7a, 7b and 7c, and each 2.5 µl of reagent-mixed liquid in the total amount of 7.5 µl whose tip has been cut down is fed to each one of three branched flow paths. One of these flow paths is communicated with the position of B in Fig. 11, to be connected to the system for reaction with specimen processing liquid and for its detection. The other one flow path which is not illustrated is communicated with the system for reaction with positive control and for its detection, while, the rest of the flow path is communicated with the system for reaction with negative control and for its detection.

Mixed reagents fed from the position B in Fig. 11 are filled in reservoir section 17a. A specimen processing liquid is fed from the position A in Fig. 11 to be filled in reservoir section 17b quantitatively. Reagent-mixed liquid and specimen processing liquid filled respectively in the reservoir sections 17a and 17b are fed to flow path 15a (volume 5 µl) through a Y-shaped flow path, and mixing and ICAN-PCR reactions are conducted in the flow path 15a.

When reaction liquid in a volume of 5 µl and reaction stop solution in a volume of 1 µl stored in stop solution storage section 21a are fed to flow path 15b in a volume of 6 µl and they are mixed, amplification reaction is stopped. Then, denaturation liquid (1 µl) stored in denaturation liquid storage section 21b and mixture liquid (0.5 µl) of reaction liquid and stop solution are fed to flow path 15c in a volume of 1.5 µl, to be mixed, thereby, amplified genes are denatured to a single strand.

This processing liquid is fed to each of streptoavidin-adsorbed sections 10a and 10b where streptoavidin is adsorbed in the flow path to immobilize amplified genes in the flow path, and cleaning fluid is let to flow to each of streptoavidin-adsorbed sections l0a and 10b for washing.

Next, hybridization buffer stored in hybridization buffer storage section 21c is stored in each of streptoavidin-adsorbed sections 10a and 10b. Then a solution of probe DNA of bacterial gene whose end portion is fluorescence-labeled with FITC stored in each of storage sections 21f, 21d, 21e and 21d, a cleaning fluid and a gold colloid solution labeled by FITC antibody are fed by a single pump 11 into flow path 10a, in the order shown in the same drawing. In the same way, a solution of probe DNA for internal control stored in each of storage sections 21g, 21d, 21e and 21d, a cleaning fluid and a gold colloid solution labeled by FITC antibody are fed by a single pump 11 into flow path 10b where amplified genes are immobilized, in the order shown in the same drawing.

Incidentally, it is also possible to constitute a flow path so that a single stranded amplified gene is made to hybridize probe DNA, at a stage before the single stranded amplified genes are immobilized on streptoavidin-adsorbing sections 10a and 10b.

When a gold colloid solution is fed, gold colloid is coupled with immobilized amplified gene through FITC, and is immobilized. By detecting the immobilized gold colloid optically, the presence or absence of amplification or an efficiency of amplification is measured.

As stated above, an internal control is subjected to amplification reaction together with a preliminary processing liquid for specimen, then, the amplification reaction liquid is divided to be fed to respective detection sections 10a and 10b, and amplification of bacterial genes is detected in the detection section l0a on one side, and amplification of the internal control is detected in the detection section 10b on the other side. Therefore, a highly reliable inspection can be made rapidly in the simple structure.

As shown in Fig. 11, check valves 16 are arranged at appropriate positions in a flow path between the reagent storage section, the reaction section and the detecting section. In addition to the foregoing, it is preferable to provide check valves at appropriate positions (for example, positions which are near the pump-connection section 12 and are at downstream side of the pump-connection section 12 in Fig. 11) for preventing contamination such as cross-contamination, as stated above.

Each of Figs. 12(a) and 12(b) is a cross-sectional view showing an example of a check valve used in a flow path of a micro-reactor in the present embodiment. In the check valve in Fig. 12(a), a valve body is represented by micro sphere 67, and opening 68 formed on base board 62 is closed or opened by a movement of the micro sphere 67, whereby, a liquid is allowed to pass through or is intercepted. Namely, when a liquid is fed in the direction A, the micro sphere 67 is detached from the base board 62 by a liquid pressure, and the opening 68 is opened, thus, the liquid is allowed to pass through. In contrast to this, when the liquid flows backward in the direction B, the micro sphere 67 is seated on the base board 62, and the opening 68 is closed, thus, the liquid is allowed to passage of the liquid is intercepted.

In a check valve shown in Fig. 12(b), flexible plate 69 that is laminated on the base board 62 and is extended over opening 68 is moved vertically by a liquid pressure, thus, the opening 68 is opened and closed. Namely, when a liquid is fed in the direction A, an end portion of the flexible plate 69 is detached from the base board 62 by a liquid pressure, and the opening 68 is opened, thus, the liquid is allowed to pass through. In contrast to this, when the liquid flows backward in the direction B, the flexible plate 69 comes in close contact with the base board 62, and the opening 68 is closed, thus, the passage of the liquid is intercepted.

It is preferable to arrange a check valve for preventing a backward flow of a liquid and thereby for conducting a prescribed liquid-feeding accurately, as stated above, and a quantitative liquid-feeding mechanism shown in Fig. 13 can be given as an ideal mechanism employing a check valve. In this mechanism, reagents in a predetermined amount are filled in the flow path (reagent filling flow path 15A) between check valve 16 and hydrophobic valve 13a, as illustrated. There is further provided branched flow path 15B that is branched from the reagent filling flow path 15A and is communicated with micro-pump 11 that feeds driving liquid.

Quantitative liquid-feeding for reagents is conducted as follows. First, reagent liquid 60 is filled by supplying the reagent liquid 60 from the check valve 16 side to the reagent filling flow path 15A at liquid-feeding pressure which does not feed the reagent liquid 60 beyond the hydrophobic valve 13a. Then, at liquid-feeding pressure which allows the reagent liquid 60 to pass beyond the hydrophobic valve 13a, driving liquid 70 is fed through hydrophobic valve 13b by micro-pump 11 in the direction from branched flow path 15B to the reagent filling flow path 15A, whereby, the reagent liquid 60 filled in the reagent filling flow path 15A is squeezed out beyond liquid-feeding control section 15A, thus, the reagent liquid 60 is fed quantitatively. In the branched flow path 15B, there are sometimes present air and sealing liquid, and even in this case, it is possible to squeeze out reagents by feeding driving liquid 70 with micro-pump 11 and thereby, by feeding air and sealing liquid into the reagent filling flow path 15A. Meanwhile, it is possible to reduce fluctuations of a fixed quantity by providing reservoir section 17a having a large volume on the reagent filling flow path 15A.

Incidentally, this quantitative liquid-feeding mechanism is used for the fixed amount (position X2 in the same drawing) of reagent-mixed liquid in Fig. 11 and for the fixed amount (position X1 in the same drawing) of specimen processing liquid.

There have been explained embodiments of the present invention, to which, however, the invention is not limited, and disclosed embodiments can be varied without departing from the spirit and scope of the invention.

## Claims

1. A micro-reactor for gene inspection, **characterized in that** the micro-reactor comprises a carrier filling section which is filled with particulate carrier which absorbs a bacterial gene in a liquid containing a bacterial gene lysed by a bacteriolysis reagent, wherein the liquid is a mixture of the bacteriolysis reagent and a specimen or a processing liquid with which the specimen is pretreated; a micro-pump connection section which is connected to an upstream of the carrier filling section and to which a micro-pump feeds liquid bidirectionally is connected; and a control means which controls the micro-pump and switches the liquid-feeding directions of a liquid which contains the bacterial gene and is fed to the carrier filling section so that the liquid flows back and forth in the carrier filling section.

2. The micro-reactor for gene inspection according to claim 1, **characterized in that** the micro-reactor comprises a bacteriolysis reagent storage section which stores a bacteriolysis reagent which lyses the bacteria in an injected specimen or the processing liquid with which the specimen is pretreated; an extraction reagent storage section which is connected to an upstream of the carrier filling section and stores a gene extraction reagent which extracts the gene absorbed in the carrier; an amplification reagent storage section which is connected to a downstream of the carrier filling section and stores an amplification reagent which amplifies gene; a reaction section which is provided downstream of the carrier filling section, the reaction section in which the reaction of the mixture of the gene extracted from the carrier with the gene extraction reagent fed from the extraction reagent storage section and the amplification reagent fed from the amplification reagent storage section is conducted so that an amplification of gene is conducted; and a first detecting section which is provided downstream of the reaction section and to which the amplification reagent having been used for conducting the amplification of gene is fed, wherein detection of a gene is conducted,
wherein the carrier filling section is provided downstream of the bacteriolysis reagent storage section, the injected specimen or the processing liquid having been used for pretreatment of the specimen and the bacteriolysis reagent stored in the bacteriolysis reagent storage section are mixed, and liquid containing the bacterial gene lysed with the bacteriolysis reagent is fed to the carrier filling section.

3. The micro-reactor for gene inspection according to claim 2, **characterized in that** the micro-reactor comprises a micro-pump connection section which is connected to an upstream of the reaction section and to which the micro-pump for feeding liquid bidirectionally is connected; and a control section which controls the micro-pump and switches a liquid-feeding direction so that the mixture of the gene and the amplification reagent fed from the amplification reagent storage section flows back and forth in the reaction section.

4. The micro-reactor for gene inspection according to claim 2, **characterized in that** the micro-pump comprises a first flow path in which a flow path resistance changes in response to a pressure difference; a second flow path in which a change ratio of a flow path resistance in response to a change in a pressure difference is smaller than a change ratio of the flow path resistance of the first flow path; a pressure chamber which is connected to the first flow path and the second flow path; an actuator for changing an internal pressure of the pressure chamber; and a driving device which drives the actuator.

5. The micro-reactor for gene inspection according to claim 3, **characterized in that** the micro-pump comprises a first flow path in which a flow path resistance changes in response to a pressure difference; a second flow path in which a change ratio of a flow path resistance in response to a change in a pressure difference is smaller than a change ratio of the flow path resistance of the first flow path; a pressure chamber which is connected to the first flow path and the second flow path; an actuator for changing an internal pressure of the pressure chamber; and a driving device which drives the actuator.

6. The micro-reactor for gene inspection according to claim 2, **characterized in that** the micro-reactor comprises at least a check valve which prevents a backflow in between the amplification reagent storage section, the bacteriolysis reagent storage section, the carrier filling section, the extraction reagent storage section, the reaction section, the first detecting section, and the micro-pump connection section.

7. The micro-reactor for gene inspection according to claim 2, **characterized in that** the micro-reactor comprises a cooling section which cools a reagent mixing section in which the amplification reagent storage section is mixed.

8. The micro-reactor for gene inspection according to claim 7, **characterized in that** the cooling section includes a Peltier element.

9. The micro-reactor for gene inspection according to claim 2, **characterized in that** the micro-reactor comprises a flowing liquid dividing section which divides liquid into two flow paths; and a second detecting section in which detection of a gene is conducted,
wherein the first and second detecting section are respectively provided downstream of each of the two flow paths,
the amplification reagent which includes the bacterial gene and an internal control both amplified simultaneously in the reaction section is divided into two portions by the flowing liquid dividing section and is fed to the first and the second detecting section, and the bacterial gene and the internal control are detected each in the first and the second detecting section.
